# EUROPEAN PATENT APPLICATION

(11) **EP 0 655 560 A1**
(43) Date of publication of application: **31.05.1995**
(21) Application number: 94308032.5
(22) Date of filing: 01.11.1994
(51) Int. Cl.: F16B 19/10, F16B 37/06

(54) **Blind fastener**

(30) Priority: 26.11.1993 GB 9324357
(71) Applicant: EMHART INC., Newark, Delaware 19711 (US)
(72) Inventor: Morris, Stephen John, Great Barr, Birmingham B43 7PT (GB)
(74) Representative: Randall, John Walter

(57) **Abstract**

A blind fastener (2) has a screw threaded bore, enabling the fastener to be set in a workpiece (16) by an appropriate tool, and a head portion (6) having an external screw thread (8). When set in a workpiece (16,22,28) the fastener can be used in a variety of ways for the attachment of other workpieces (18,24,30).

## Description

The present invention is concerned with blind fasteners set in a hole in a workpiece to provide an anchorage for other fasteners.

Blind fasteners have for many years been widely used to secure work pieces together, but are normally not easily released if it is desired to separate the workpieces. With the increased interest in the recycling of components, and the consequent need to be able to dismantle components easily, a requirement has arisen for a fastener which enables components easily to be secured together and released.

It is an object of the present invention to provide a blind fastener to be set in a hole in a work piece which will provide an anchorage for other fasteners to enable a further workpiece to be releasably secured to the first.

The present invention provides a blind fastener for setting in a hole in a work piece
which fastener comprises a cylindrical body having a through bore, the body comprising
an enlarged head portion having an external screw thread
a thin walled intermediate portion
a thicker tail end portion having an internal screw thread
the external diameters of the intermediate portion and the tail end portion being the same and less than that of the head portion
the internal diameters of the bore in the intermediate portion and the head portion being the same and greater than that of the tail end portion.

A blind fastener embodying the invention will now be described with reference to the accompanying drawings in which
Figure 1 shows a view, in longitudinal section, of a fastener embodying the invention;
Figures 2, 3, & 4 show uses of the fastener of Figure 1 when set in a work piece.

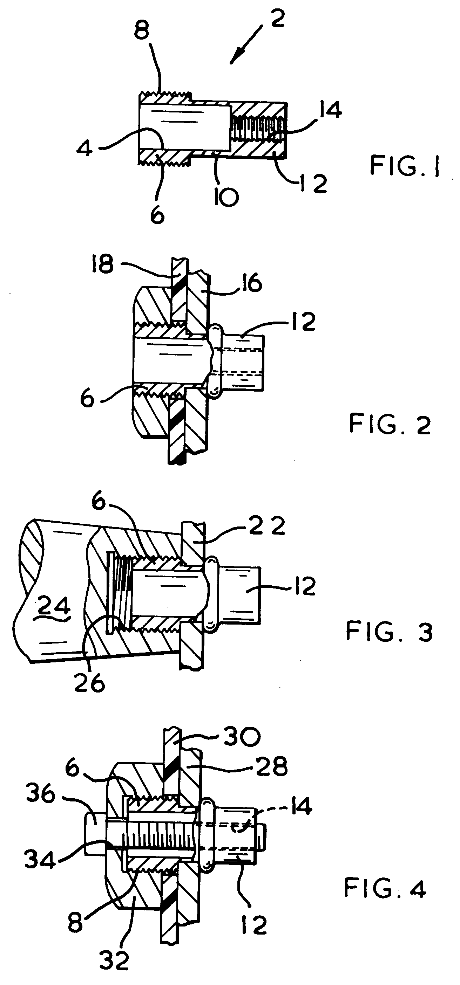

The blind fastener (Figure 1) is intended for setting in a hole in a work piece to provide an anchorage for further fasteners, and comprises a cylindrical body portion 2 having a through bore 4. The body portion 2 comprises an enlarged, generally cylindrical, head portion 6 which is provided with an external screw thread 8. Extending from the head portion 6 is a thin walled intermediate portion 10, from which extends a thicker tail end portion 12 which has an internal screw thread 14.

The external diameters of the intermediate portion 10 and the tail end portion 12 are the same and are less than that of the head portion 8. The internal diameters of the bore 4 in the intermediate portion 10 and the head portion 8 are the same and greater than that of the screw threaded bore of the tail end portion 14.

The fastener can be set in a work piece by a conventional tool having a screw threaded mandrel and an abutment head. The fastener is threaded onto the mandrel so that the mandrel engages the screw thread 14, inserted into a hole in a workpiece, and relative movement is caused between the mandrel and the abutment head, which engages the head portion 6, to cause the intermediate portion 10 to bulge outwards to set the fastener in the work piece (see Figure 2).

The fastener is capable of use in a variety of ways releasably to secure workpieces together.

Figure 2 shows the fastener set in a first workpiece 16 with another workpiece 18 secured to it by a nut 20 screwed onto head portion 6. If desired, a further workpiece can be secured to the resultant assembly by a bolt screwed into the tail end portion 12.

Figure 3 shows the fastener set in to a workpiece 22 which it is desired to secure to a shaft 24. The shaft 24 is provided with a threaded recess 26 into which the head portion 6 of the set fastener is screwed. Again, if it is desired to secure a further workpiece to the resultant assembly, this can be done by a bolt screwed into the tail end portion 12.

Figure 4 shows the fastener utilized as a secure fixing. In this case the external thread 8 and the internal thread 14 are of opposite hands. The fastener is set into a first workpiece 28, and a second work piece 30 is secured to the first workpiece 28 by a cap nut 32 screwed onto the thread 8 of the head portion 6. The cap nut 32 comprises an axial hole 34 through which a bolt 36 is passed and screwed into the thread 14 of the tail end portion 12. It can be seen that the bolt 36, being of opposite hand to the cap nut 32 restrains the nut from any tendency to work loose.

The fastener may be made of any suitable metal.

## Claims

1. A blind fastener for setting in a hole in a work piece
which fastener comprises a cylindrical body having a through bore, the body comprising
an enlarged head portion having an external screw thread
a thin walled intermediate portion
a thicker tail end portion having an internal screw thread
the external diameters of the intermediate portion and the tail end portion being the same and less than that of the head portion
the internal diameters of the bore in the intermediate portion and the head portion being the same and greater than that of the tail end portion.

2. A fastener according to claim 1 wherein the internal screw thread of the tail end portion and the external screw thread of the head portion are of opposite hands.
